Europäisches Patentamt

European Patent Office

Office européen des brevets

(19)

(11) **EP 1 148 333 A1**

(12) **EUROPÄISCHE PATENTANMELDUNG**

(43) Veröffentlichungstag:
**24.10.2001 Patentblatt 2001/43**

(51) Int Cl.⁷: **G01N 23/04, G01N 23/18**

(21) Anmeldenummer: **00102507.1**

(22) Anmeldetag: **05.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **YXLON International X-Ray GmbH 22419 Hamburg (DE)**

(72) Erfinder:
• **Mery, Domingo 12203 Berlin (DE)**

• **Filbert, Dieter, Prof. Dr.-Ing. 12163 Berlin (DE)**

(74) Vertreter: **von Raffay, Vincenz, Dipl.-Ing. et al Raffay & Fleck Patentanwälte, Geffckenstrasse 6 20249 Hamburg (DE)**

(54) **Verfahren zur automatischen Gussfehlererkennung in einem Prüfling**

(57) Die vorliegende Erfindung stellt ein neues Verfahren zur automatischen Inspektion von beispielsweise Aluminium - Gussteilen mit Hilfe monokularer Röntgenbildsequenz vor, das bei verschiedenen Positionen des Prüflings aufgenommen wird. Die klassischen Ansätze zur automatischen Gussfehlererkennung bestehen aus modifizierten Medianfiltern, die fehlerfreie Röntgenbilder aus den aufgenommenen Röntgenbildern schätzen. Diese Bilder werden miteinander verglichen, und Gussfehler werden detektiert, wenn eine besonders erhebliche Differenz zwischen ihnen existiert. Jedoch hängt die Konfiguration jedes Filters sehr stark von der Größe, Form und Position der konstruktiven Struktur des Prüflings ab. Deswegen müssen diese Eigenschaften des Prüflings als a priori vorhanden angesehen werden. Das erfindungsgemäße Verfahren kann dem gegenüber die Gussfehler in zwei Schritten automatisch erkennen. Das Verfahren benutzt ein einzelnes Filter und keine a priori Kenntnisse über die Struktur des Prüflings. Abgesehen von der Kalibierung segmentiert der erste Schritt des Verfahrens hypothetische Gussfehler in jedem Bild der Sequenz. Im zweiten Schritt wird versucht, die hypothetischen Gussfehler in der Bildsequenz zu verfolgen. Der Grundgedanke des erfindungsgemäßen Verfahrens ist, daß angenommen wird, daß die hypothetischen Gussfehler, die sich in der Sequenz nicht verfolgen lassen, Fehldetektionen sind. Durch die Anwendung dieses Verfahrens können die echten Gussfehler mit höchster Wahrscheinlichkeit detektiert und Fehldetektionen eliminiert werden. Die Verfolgung der hypothetischen Gussfehler in der Bildsequenz wird nach den Prinzipen der Mehr-Bild-Analyse durchgeführt. Bifokale, trifokale und quadrifokale Tensoren werden zur Reduzierung der Rechenzeit angewendet. Nach einer 3D-Rekonstruktion der in der Bildsequenz verfolgten hypothetischen Gussfehler können diejenigen eliminiert werden, die nicht zum Raum des Prüflings gehören. Die Robustheit und Zuverlässigkeit des Verfahrens wurden bei halbsynthetischen und realen Röntgenbildsequenzen überprüft, die von einer Alufelge mit bekannten Materialfehlern aufgenommen wurden: Die echten Gussfehler wurden erkannt und die Fehldetektionen entfernt (Abb. 1.2).

Abb. 1.1: Eine schematische Ausschnittsdarstellung von drei Gussfehlern in einem Röntgenbild einer Alufelge.

**Abb. 1.2:** Ein Diagramm einer automatischen Röntgenprüfanlage nach dem Stand der Technik.

**Abb. 1.3:** Ein vorbekanntes Verfahren zur automatischen Gussfehlererkennung nach [9] mit einem Prüfbild **I**, einem Referenzbild **R**, einem Fehlerdifferenzbild **D** und einem binären Segmentierungsergebnis **F**.

**Abb. 2.1:** Darstellung des geometrischen Modells.

**Abb. 2.2:** Ein Röntgenbild der Rasterplatte (links) und die hyperbolische Modellierung ihrer Verzerrung (rechts).

**Beschreibung**

Die Erfindung betrifft ein Verfahren zur automatischen Gussfehlererkennung in einem Prüfling nach dem Oberbegriff des Hauptanspruches.

Derartige Verfahren sind in unterschiedlichen Ablaufweisen bekannt. Als nächstliegender Stand der Technik wurden die Publikationen der vorliegenden Erfindung angesehen, die in dem anhängenden Literaturverzeichnis unter [12] - [14] durchgeführt sind.

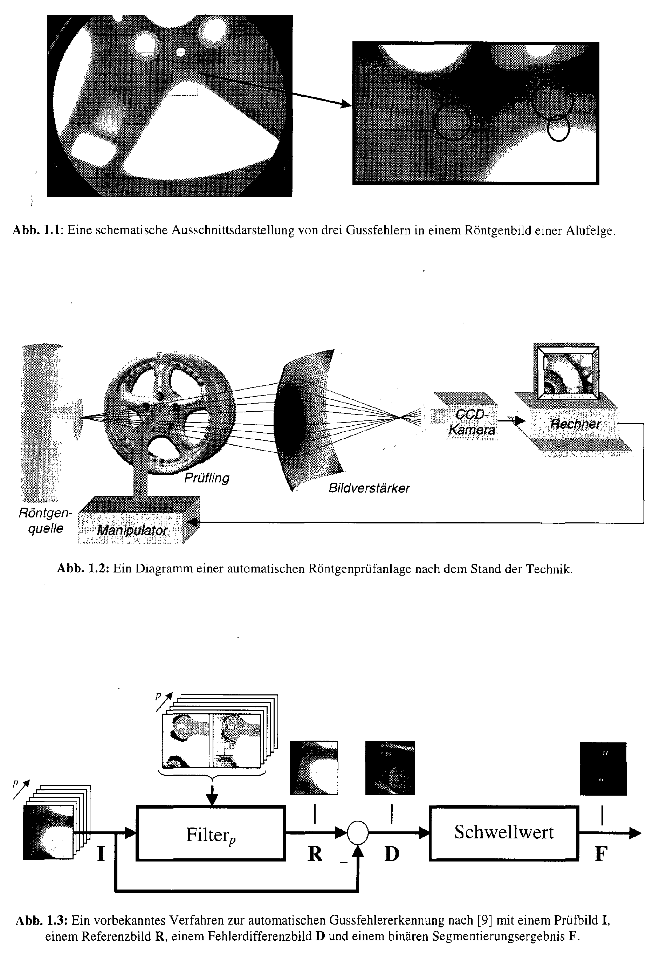

Die Qualitätskontrolle von Gussteilen erfolgt mit Hilfe der Röntgendurchleuchtungsprüfung. Ihre Aufgabe ist die Untersuchung auf Gussfehler, die sich im Innern des Teiles befinden und somit von Außen nicht visuell zu erfassen sind. Bei der Fertigung von Gussteilen können Schrumpfungsprozesse auftreten, wenn flüssiges Metall durch Abkühlung erstarrt. Es kommt dann zu Hohlräumen im Inneren des Werkstückes, wenn kein flüssiges Metall nachfließen kann. Dazu kommen andere Gussfehler im Giessereiprozess, wie Einschlüsse bzw. Schlacken. Ein Beispiel ist in Abb. 1.1 gezeigt.

Seit einigen Jahren werden Röntgenprüfanlagen in der Automobilindustrie eingesetzt, um die Qualitätskontrolle von Gussteilen automatisch durchzuführen [1, 6, 10]. Eine automatische Röntgenprüfanlage, wie in Abb. 1.2 dargestellt ist, besteht aus:

i) einem Manipulator zur Handhabung des Prüflings,

ii) einer Röntgenquelle, die ein Röntgenbild des Prüflings via Zentralprojektion erzeugt.

iii) einem Bildverstärker, der das nicht sichtbare Röntgenbild in ein sichtbares umwandelt,

iv) einer CDD-Kamera, die das sichtbares Röntgenbild aufnimmt, und

v) einem Bildverarbeitungsrechner, dessen Aufgabe die automatische Klassifizierung des Prüflings in Gutteil oder Ausschußteil durch die Verarbeitung des Röntgenbildes ist.

Nach den klassischen Verfahren werden bei der Röntgendurchleuchtungsprüfung in der Regel monokulare Projektionen aus verschiedenen Positionen des Prüflings aufgenommen. Die in der Praxis eingesetzten Detektionsansätze [15, 10, 9 17] berechnen ein Referenzbild aus jedem aufgenommenen Röntgenbild. Ein Gussfehler wird dann detektiert, wenn eine große Differenz zwischen Röntgenbild und Referenzbild auftritt (s. Abb. 1.3). Bei diesen Verfahren hat jede Aufnahme ihr eigenes Filter, das aus mehreren kleinen Fenstern besteht. Die Richtung und Größe dieser Fenster sind so einzustellen, daß das Filter an die Struktur des Prüflings bei der entsprechenden Position der Aufnahme angepaßt ist. Diese Methoden unterscheiden sich in der Art der Filterung, die zur Berechnung des Referenzbildes angewendet wird. Nachteile der klassischen Verfahren sind:

-    Konfiguration des Filters: Zur Untersuchung eines Gussteiles muß der Prüfling in der Regel in ca. 20 Positionen geröntgt werden. Für jede Position ist ein Filter zu konfigurieren. In der Praxis ist diese Konfiguration sehr aufwendig, weil sie manuell durchgeführt werden muss. Die Einstellung der Filter eines sehr komplexen Gussteiles kann bis zu vier Wochen dauern. Da die ermittelten Filter an der Struktur eines Prüflings angepaßt sind, können sie logischerweise bei Prüflingen anderer Struktur nicht benutzt werden.

-    Mißerfolg der Filterung bei Positionierungsungenauigkeit: Die Schätzung eines fehlerfreien Referenzbildes scheitert, wenn es eine große Abweichung zwischen Soll- und Ist-Position des Prüflings gibt, weil die Anpassung des eingestellten Filters an die Struktur nicht mehr erfüllt werden kann. Dieses Problem trifft bei der Bewegung eines Gussteiles zu den programmierten Positionen nicht selten auf, da die mehreren Abbremsen und Beschleunigungen des Manipulators zu einem Rutschen des Gussteiles führen kann.

-    Keine Anwendung der Korrespondenz zwischen Röntgenbildern: Diese Methoden suchen nach Materialfehlern in jedem digitalisierten Röntgenbild, ohne zu berücksichtigen, daß die Fehler in mehreren Projektionen zum Vorschein kommen können. Die Information der Position des Prüflings, die normalerweise bei jedem Manipulator zur Verfügung steht, kann verwendet werden, um eine Korrespondenz zwischen den aufgenommenen Röntgenbildern zu finden. Auf dieser Weise kann herausgefunden werden, ob die in den einzelnen Bildern detektierten Fehler echte Gussfehler oder Fehldetektionen sind.

Auch ist die Auswertung von Röntgenbildsequenzen schon bekannt. Das Verfahren orientiert sich daran, wie ein Prüfer ein Gussteil auf Materialfehler untersucht. Statt Einzelbilder betrachtet er eine Bildsequenz. Der Prüfling bewegt sich in der Prüfanlage und die Augen des Prüfers verfolgen die Details, die auf dem Bildschirm zum Vorschein kommen. Ein Gussfehler wird dann detektiert, wenn die Augen den Fehler in der Bildsequenz verfolgen können. Dieses Verfahren erlaubt dem Menschen jeden Prüfling unabhängig von der konstruktiven Struktur des Gussteiles zu untersuchen.

Hierbei wird ein einzelnes Filter zur Detektion hypothetischer Gussfehler in jedem Röntgenbild einer Sequenz des Prüflings benutzt. Die Konfiguration des Filters ist unabhängig von der konstruktiven Struktur und der Position des Prüflings. Die Anzahl der segmentierten hypothetischen Gussfehler ist nicht gering, aber beim Versuch, die hypothetischen Gussfehler in der Bildsequenz zu verfolgen, lassen sich die Fehldetektionen eliminieren, ohne die echten Gussfehler zu diskriminieren.

Dieses Verfahren wurde schon in [12] vorgeschlagen, indem zwei Ansätze [13, 14] zur Verfolgung hypothetischer Gussfehler in einer Bildsequenz entwickelt wurden:

- Methode A: Wegen der rotatorischen Bewegung des Prüflings werden diejenige hypothetischen Gussfehler entfernt, die keine elliptische Trajektorie in der Bildsequenz bilden [14].

- Methode B: Mit Hilfe der Epipolargeometrie [3] wird in mehreren Bildern überprüft, ob die Punkte einer gebildeten Trajektorie zueinander korrespondieren [13].

Die Diskriminierung nicht elliptischer Trajektorien in [14] ist aber wenig robust. Außerdem kann die Berechnung der Punkte der Trajektorien in [13] aus drei oder vier Bildern durch die epipolare Bedingung nicht direkt durchgeführt werden. Die Schätzung des Schnittpunktes von Epipolargeraden in mehr als zwei Ansichten ist in einigen Fällen nicht definiert [5]. Die Gussfehlerdetektion ist also zeitaufwendig und nicht robust genug.

Der Erfindung liegt deshalb die Aufgabe zugrunde, die Robustheit derselben zu erhöhen und Fehldetektionen zu verringern.

Diese Aufgabe wird erfindungsgemäß durch das eingangs genannte Verfahren gelöst, wie es im Anspruch 1 gekennzeichnet ist.

Die erwähnten Probleme werden also insbesondere durch die Kalibrierung der Anlage, spez. Suche nach Fehlerbereichen und die Anwendung der bifokalen, trifokalen und quadrifokalen Tensoren überwunden. Die Verfolgung der hypothetischen Gussfehler in der Bildsequenz wird nach den Prinzipen der Mehr-Bild-Analyse durchgeführt. Die Grundlagen der Mehr-Bild-Tensoren sind in [5, 7, 8, 11, 16] zu finden.

Weitere Vorteile und Merkmale gehen aus den Unteransprüchen hervor, die auch gemeinsam mit dem Hauptanspruch von erfinderischer Bedeutung sein können. Zum folgenden wird ein bevorzugtes Ausführungsbeispiel anhand der Zeichnungen näher erläutert, auf das die Erfindung jedoch nicht beschränkt ist. Es zeigt:

Abb. 1.1 eine schematische Ausschnittsdarstellung von drei Gussfehlern in einem Röntgenbild einer Alufelge;

Abb. 1.2 ein Diagramm einer automatischen Röntgenprüfanlage nach dem Stand der Technik;

Abb. 1.3 ein vorbekanntes Verfahren zur automatischen Gussfehlererkennung nach [9] mit einem Prüfbild I, einem Referenzbild R, einem Fehlerdifferenzbild D und einem binären Segmentierungsergebnis F;

Abb. 2.1 Darstellung des geometrischen Modells;

Abb. 2.2 ein Röntgenbild der Rasterplatte (links) und die hyperbolische Modellierung ihrer Verzerrung (rechts);

Abb. 3.1 eine schematische Darstellung von einer Röntgenbildsequenz mit neun Bildern und zwei Gussfehlern im Kreis;

Abb. 3.2 Beispiel der Segmentierung: a) Röntgenbild. b) Kantendetektion. c) Gefundene Region;

Abb. 3.3 Darstellung einer geschlossenen Region;

Abb. 3.4 3D Darstellung des in Abb. 3.2a gezeigten Röntgenbildes;

Abb. 3.5 Darstellung der Profile. a) $P_1$, b) $P_2$ und c) $P = (P_1 + P_2)/2$;

Abb. 3.6 Darstellung des rampenfreien Profils. a) P und seine Rampe R. b) $Q = P - R$;

Abb. 3.7 eine schematische Ausschnittsdarstellungen einer Segmentierung hypothetischer Gussfehler im fünften Röntgenbild der in Abb. 3.1 dargestellten Bildsequenz;

Abb. 3.8 eine schematische Darstellung der Segmentierung hypothetischer Gussfehler in der Bildsequenz der Abb. 3.1;

Abb. 4.1    eine schematische Darstellung des Matching hypothetischer Gussfehler in einer Bildsequenz;

Abb. 4.2.    eine vier Bilder umfassende Darstellung des Matchings der Region (1,p), wobei die epipolaren Geraden des Schwerpunktes von (1,p) in Bildern p+1, p+2 und p+3 dargestellt werden;

Abb. 4.3    eine schematische Darstellung der Verfolgung hypothetischer Gussfehler in drei Bildern;

Abb. 4.4    eine schematische Darstellung der Verfolgung hypothetischer Gussfehler in vier Bildern;

Abb. 4.5    eine schematische Darstellung der zusammengefaßten Trajektorien hypothetischer Gussfehler;

Abb. 4.6    eine schematische Darstellung detektierter Gussfehler;

Tabelle 5.1    Detektion in realen Röntgenbildsequenzen;

Abb. 5.1    eine graphische Darstellung der Fehldetektionen in den 14 realen Bildsequenzen der Tabelle 5.1, wobei die Anzahl der segmentierten hypothetischen Gussfehlern 100% entspricht. Der Mittelwert jedes Schrittes ist oberhalb der Kurven eingetragen und

Abb. 5.2    Detektion in halb-synthetischen Röntgenbildsequenzen:

    a) Bereich der Untersuchung,
    b) Größe der Gussfehler,
    c) Mittelwert der echten Detektionen, sowie Fehldetektionen.

Das erfindungsgemäße Verfahren besteht grundsätzlich aus drei Abschnitten: Kalibrierung von Prüfanlage und Kamera, Aufnahme und Segmentierung, sowie Verfolgung hypothetischer Gussfehler und deren Analyse.

Im folgenden soll näher auf den ersten Schritt des erfindungsgemäßen Verfahrens eingegangen werden. Es handelt sich hierbei um eine Kalibrierung, die offline stattfindet, wobei die relevanten geometrischen Parameter des Verfahrens vermessen bzw. geschätzt werden. Zunächst wird hierzu die gesamte Geometrie der Prüfanlage vermessen, nämlich hinsichtlich ihrer Länge, Breite und Höhe, sowie der Abstände zwischen den einzelnen Geräten. Besondere Werte müssen hier nicht eingehalten werden, jedoch durch Messen festgestellt werden. Ziel der Kalibrierung ist, die Transformation zwischen einem 3D-Punkt des Gussteiles und dem 2D-Pixel des Röntgenbildes zu bestimmen.

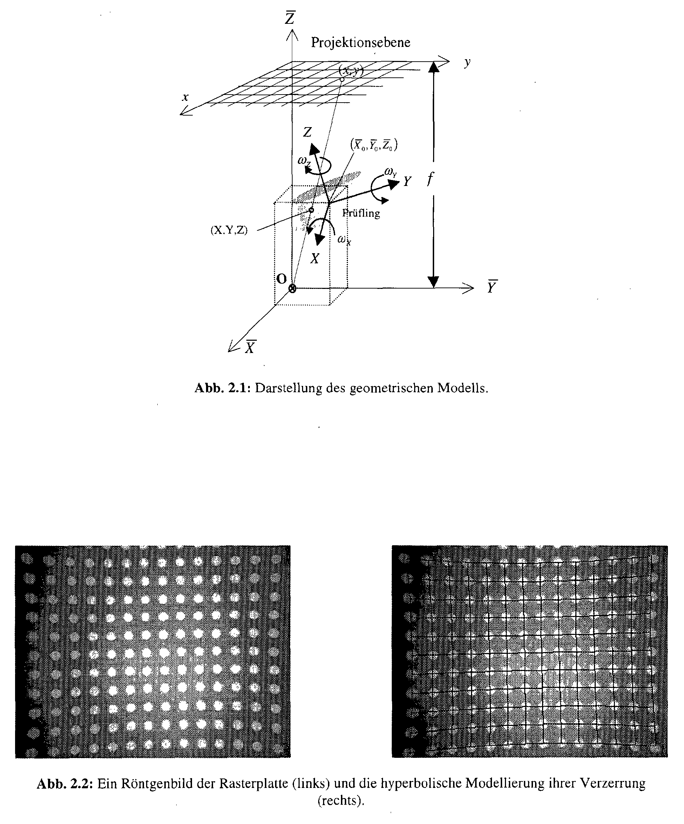

Die Position des Prüflings wird durch die translatorischen und rotatorischen Positionsgrößen des Manipulators definiert. Die translatorischen Größen $(\bar{X}_0, \bar{Y}_0, \bar{Z}_0)$ (s. Abb. 2.1) stellen die Position des Zentrums des Prüflings bezogen auf die Position der Röntgenquelle **O** dar. Die rotatorischen Größen $(\omega_X, \omega_Y, \omega_Z)$ (s. Abb. 2.1) repräsentieren die Drehung des Prüflings um die $X$-, $Y$-, und $Z$- Achsen. Diese Meßgrößen stehen im Manipulator zur Verfügung. Die Größen $(\bar{X}_0, \bar{Y}_0, \bar{Z}_0)$ werden in Millimetern und die Größen $(\omega_X, \omega_Y, \omega_Z)$ in Grads angegeben.

In dieser Anmeldung werden homogene Koordinaten zur Repräsentation von Punkten angewendet [2]. Ein 3D-Prüflingspunkt wird als $\mathbf{X} = [X\,Y\,Z1]^T$ in einem Objektkoordinatensystem bezeichnet, das mit dem sich bewegenden Objekt verknüpft ist. D.h. diese Koordinaten sind unabhängig von der Bewegung des Prüflings.

Zur Bestimmung der Transformation wird zuerst **X** auf die Projektionsebene $(x,y)$ linear projiziert (s. Abb. 2.1). Die Projektionsebene befindet sich senkrecht zu der optischen Achse beim Eingang des Bildverstärkers. Die Beziehung zwischen einem Punkt $\mathbf{X} = [X\,Y\,Z\,1]^T$ des Prüflings und seiner Projektion auf der Projektionsebene $x = [x\,y\,1]^T$ wird durch die folgende lineare Gleichung beschrieben:

$$\lambda \begin{bmatrix} x \\ y \\ 1 \end{bmatrix} = \begin{bmatrix} P_{11} & P_{12} & P_{13} & P_{14} \\ P_{21} & P_{22} & P_{23} & P_{24} \\ P_{31} & P_{32} & P_{33} & P_{34} \end{bmatrix} \begin{bmatrix} X \\ Y \\ Z \\ 1 \end{bmatrix} \qquad \text{oder} \qquad \lambda \mathbf{x} = \mathbf{PX} \qquad (2\text{-}1)$$

wobei $\lambda$ ein Skalierungsfaktor ist. Die Matrix **P** wird für jede Position des Prüflings aus dem fokalischen Abstand $f$, den translatorischen und rotatorischen Positionsgrößen berechnet:

$$\mathbf{P} = \begin{bmatrix} f & 0 & 0 & 0 \\ 0 & f & 0 & 0 \\ 0 & 0 & 1 & 0 \end{bmatrix} \begin{bmatrix} R_{11} & R_{12} & R_{13} & \overline{X}_0 \\ R_{21} & R_{22} & R_{23} & \overline{Y}_0 \\ R_{31} & R_{32} & R_{33} & \overline{Z}_0 \\ 0 & 0 & 0 & 1 \end{bmatrix} \tag{2-2}$$

wobei die Elemente der 3 x 3 Matrix **R** folgendermaßen definiert werden:

$$
\begin{aligned}
R_{11} &= \cos(\omega_Y)*\cos(\omega_Z) \\
R_{12} &= -\cos(\omega_Y)*\sin(\omega_Z) \\
R_{13} &= -\sin(\omega_Y) \\
R_{21} &= -\sin(\omega_X)*\sin(\omega_Y)*\cos(\omega_Z)+\cos(\omega_X)*\sin(\omega_Z) \\
R_{22} &= \sin(\omega_X)*\sin(\omega_Y)*\sin(\omega_Z)+\cos(\omega_X)*\cos(\omega_Z) \\
R_{23} &= -\sin(\omega_X)*\cos(\omega_Y) \\
R_{31} &= \cos(\omega_X)*\sin(\omega_Y)*\cos(\omega_Z)+\sin(\omega_X)*\sin(\omega_Z) \\
R_{32} &= -\cos(\omega_X)*\sin(\omega_Y)*\sin(\omega_Z)+\sin(\omega_X)*\cos(\omega_Z) \\
R_{33} &= \cos(\omega_X)*\cos(\omega_Y)
\end{aligned}
\tag{2-3}
$$

In der Radioskopie wird das Röntgenbild jedoch auf einen gewölbten Bildverstärker abgebildet (s. Abb. 1.2). In diesem Fall ist die Projektion nichtlinear. Als Beispiel stellt Bild Abb. 2.2 das Röntgenbild einer regulären Rasterplatte dar. Man kann erkennen, dass, je entfernter von der Mitte des Bildes sich ein Loch der Rasterplatte befindet, desto stärker ist seine projektive Verzerrung. Dies hat seinen Grund darin, dass die Abweichung der Normalrichtung der Oberfläche des Bildverstärkers von der Richtung der optischen Achse an den Ecken am grössten ist.

Die Beziehung zwischen einem Punkt $(x,y)$ auf der Projektionsebene und einem Pixel $(u, v)$ im Röntgenbild ist wegen der erwähnten Krümmung des Bildverstärkers nichtlinear:

$$\begin{bmatrix} x \\ y \\ 1 \end{bmatrix} = \begin{bmatrix} f_1(u,v) \\ f_2(u,v) \\ 1 \end{bmatrix} \qquad \text{oder} \qquad \mathbf{x} = \mathbf{f}(\mathbf{u}) \tag{2-4}$$

mit $\underline{x} = [x\ y\ 1]^T$ und $\mathbf{u} = [u\ v\ 1]^T$. Die nichtlineare Funktion $\mathbf{f}$ wird in diesem Verfahren als hyperbolisch [12] modelliert. Zuerst findet eine affine Transformation (Rotation, Translation und Skalierung) der Bildkoordinaten statt:

$$\begin{bmatrix} u' \\ v' \\ 1 \end{bmatrix} = \begin{bmatrix} k_x \cos(\alpha) & k_y \sin(\alpha) & u_0 \\ -k_x \sin(\alpha) & k_y \cos(\alpha) & v_0 \\ 0 & 0 & 1 \end{bmatrix}^{-1} \begin{bmatrix} u \\ v \\ 1 \end{bmatrix} \tag{2-5}$$

Danach werden die Koordinaten der Projektionsebene berechnet:

$$x = \frac{u'}{\sqrt{1 + \left[\dfrac{u'}{a}\right]^2 + \left[\dfrac{v'}{b}\right]^2}} \quad \text{und} \quad y = \frac{v'}{\sqrt{1 + \left[\dfrac{u'}{a}\right]^2 + \left[\dfrac{v'}{b}\right]^2}} \tag{2-6}$$

Die Transformation eines 3D-Punktes des Gussteiles $\mathbf{X}$ = $[X\ Y\ Z\ 1]^T$ in ein 2D-Pixel des Röntgenbildes $\mathbf{u}$ = $[u\ v\ 1]^T$ geschieht also in drei Schritten:

- Multipliziert man $\mathbf{X}$ mit der Projektionsmatrix $\mathbf{P}$ in (2-1), erhält man die Koordinaten (x,y).
- Die Rücktransformation von (2-6) liefert die Koordinaten ($u',v'$):

$$u' = \frac{x}{\sqrt{1 - \left[\dfrac{x}{a}\right]^2 - \left[\dfrac{y}{b}\right]^2}} \quad \text{und} \quad v' = \frac{y}{\sqrt{1 - \left[\dfrac{x}{a}\right]^2 - \left[\dfrac{y}{b}\right]^2}} \qquad (2\text{-}7)$$

- Aus der Rücktransformation von (2-5) bekommt man die Koordinaten des Pixels ($u,v$):

$$\begin{bmatrix} u \\ v \\ 1 \end{bmatrix} = \begin{bmatrix} k_x \cos(\alpha) & k_y \sin(\alpha) & u_0 \\ -k_x \sin(\alpha) & k_y \cos(\alpha) & v_0 \\ 0 & 0 & 1 \end{bmatrix} \begin{bmatrix} u' \\ v' \\ 1 \end{bmatrix} \qquad (2\text{-}8)$$

Zur Kalibrierung werden $N$=5 Röntgenbilder des Prüflings aus Verschiedenen Positionen aufgenommen. Die Alufelge wird jedes mal um 5° an der Z-Achse gedreht. Bei jeder Aufnahme wird die genaue Position und Rotation des Prüflings aus dem Manipulator registriert. Aus diesen Informationen werden die projektiven Matrizen $P_p$ (für $1 \leq p \leq N$) berechnet. Die Parameter $a$ und $b$ des hyperbolischen Modells (s. Gleichungen (2-6) und (2-7)) sowie die Parameter $\alpha$, $u_0$, $v_0$, $k_x$ und $k_y$ der affinen Transformation (s. Gleichungen (2-5) und (2-8)) sind aus Korrespondenzpunkten der Röntgenbildern mit Hilfe eines Gradientenverfahrens zu schätzen. Übliche Werte liegen hier im Bereich von:

| Parameter | $\alpha$ | $u_0$ | $v_0$ | $a$ | $b$ | $k_x$ | $k_y$ | $f$ |
|---|---|---|---|---|---|---|---|---|
| Wert | -90° | 280 Pixel | 380 Pixel | 330 mm | 360 mm | 2 Pixel/ mm | 2 Pixel/ mm | 885 mm |

Versuche haben gezeigt, dass erfindungsgemäßen Verfahren beim Arbeiten eine derartige Kalibrierung zwingend erforderlich ist.

Im folgenden wird auf die Aufnahme und Segmentierung hypothetischer Gussfehler näher eingegangen:

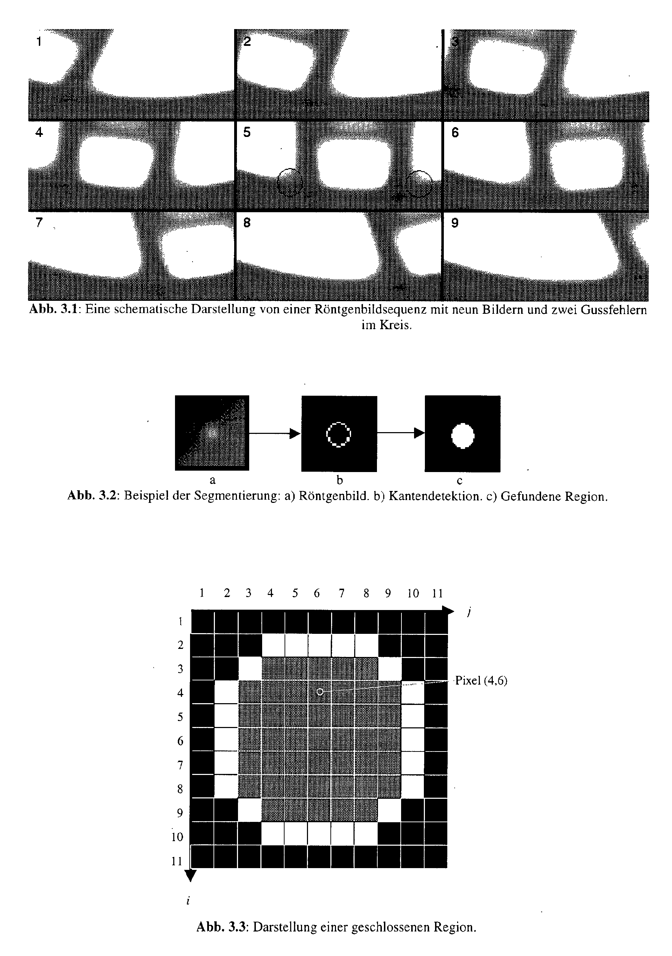

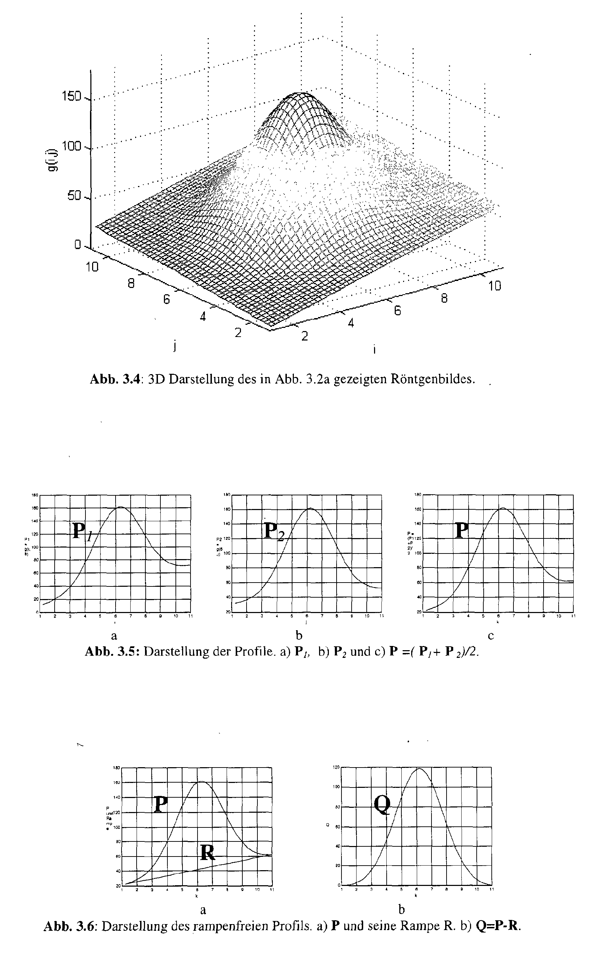

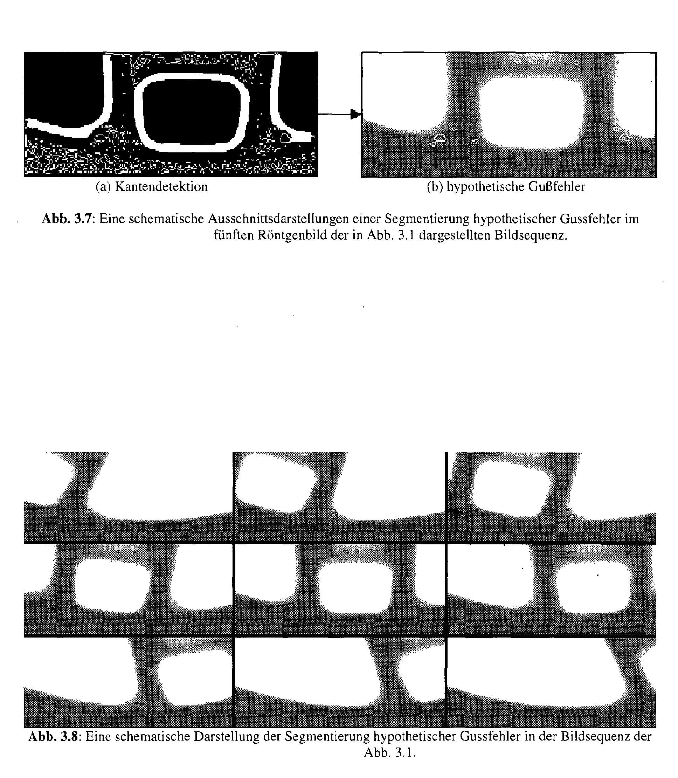

Die Kamera nimmt das vom Bildverstärker gelieferte Röntgenbild auf und führt das analoge Videosignal einem Rechner zu. Die Frame-Grabber-Karte des Rechners tastet es ab und bildet eine Sequenz von digitalisierten Röntgenbildern, die auf dem Rechner gespeichert wird. Die Bildsequenz wird aus verschiedenen Positionen des Prüflings ohne Integration aufgenommen. Der Prüfling wird jedes mal um beispielsweise 5° gedreht. Andere Winkel sind denkbar. Eine Bildsequenz wird in Abb. 3.1 gezeigt.

Zur Verfolgung ist es notwendig, die genaue Position, in der sich der Prüfling im Moment der Aufnahme befindet, zu registrieren. Diese Information steht im Manipulator online zur Verfügung. Die Position des Prüflings wird durch die translatorischen und rotatorischen Positionsgrößen definiert. Die translatorischen Größen ($\bar{X}_0,\bar{Y}_0,\bar{Z}_0$) und die rotatorischen Größen ($\omega_X,\omega_Y,\omega_Z$), die oben definiert wurden (s. Abb. 2.1), sind bei jeder Aufnahme zu speichern.

Nachfolgend wird der Algorithmus erläutert, der zur Segmentierung hypothetischer Gussfehler entwickelt wurde. In jedem Bild der Sequenz werden Regionen gesucht, die echte Fehler sein könnten. In diesem Schritt wird die Korrespondenz zwischen Bildern noch nicht berücksichtigt. Der Algorithmus besteht aus zwei Schritten: Kantendetektion und Suche der Regionen. Das Segmentierungsverfahren wird nochmals mit Hilfe eines einfachen Beispiels erklärt. Das Beispiel zeigt, wie ein Gussfehler in einem Röntgenbild (s. Abb. 3.2a) segmentiert wird.

Bei der Kantendetektion werden die Kanten jedes Röntgenbildes der Sequenz detektiert. Die Kanten entsprechen den Konturen, auf denen starke Änderungen der Grauwerte im Röntgenbild auftreten. In dieser Arbeit wird ein auf Laplacian-of-Gaussian (LoG) basierendes Kantendetektionsverfahren angewendet [2, 3], das die Nulldurchgänge der zweiten Ableitung des nach Gauß tiefpaßgefilterten Bildes detektiert. Zur Erinnerung: Der Nulldurchgang der 2. Ableitung einer Funktion entspricht dem Maximum bzw. Minimum der 1. Ableitung der Funktion (die 1. Ableitung wird auch Gradient genannt). Die Unterdrückung des Quantenrauschens der Röntgenbilder geschieht durch diese Gauß-Tiefpaßfilterung. Das resultierende Binärbild weißt an den echten Gussfehlern geschlossenen und verbundenen Konturen vor, die Regionen definieren. Um die Anzahl der geschlossenen Regionen zu erhöhen, werden dazu die Pixel markiert, bei denen der Gradient größer als ein Schwellwert ist. Als Ergebnis dieses Schrittes erhält man ein Binärbild, das in Abb. 3.2b gezeigt wird.

Bei der Segmentierung der Regionen werden Merkmale aus den durch die Kanten gebildeten Regionen extrahiert. Eine Region wird als hypothetischer Gussfehler klassifiziert, wenn ihre Merkmalswerte sich zwischen bestimmten Schwellwerten befinden. Die Suche der Regionen geschieht also durch eine Extraktion von Merkmalen und eine Klassifizierung.

Im folgenden werden die in diesem Verfahren angewendeten Merkmale definiert und danach wird der Algorithmus der Klassifizierung beschrieben.

Unter Region wird die Pixelmenge verstanden, die in einem Binärbild durch Kanten begrenzt wird. Die Region unseres Beispiels setzt sich aus den Pixeln zusammen, die zum Kreis gehören. Eine Vergrößerung der Abb. 3.2b ist in Abb. 3.3 dargestellt, wobei die Pixel der Region in Grau markiert wurden. Die äußere Begrenzung der Region definiert die Grenze der Region (s. weiße Pixel in Abb. 3.2b und 3.3). Die Pixel der Grenze wurden in der Kantendetektion ermittelt.

In diesem Verfahren werden fünf Merkmale extrahiert, die auf eine Region bezogen werden. Die Merkmale lauten:

- Flächengröße (A),
- Roundness bzw. Formfaktor (R),
- Mittelwert der Grauwerte (G),
- Mittelwert der Gradienten an der Grenze (H) und
- Kontrast (K).

Die Flächengröße (A) wird als die Anzahl der Pixel der Region definiert. In diesem Beispiel ist die Flächengröße die Anzahl der grauen Pixel, also A=45 Pixel.

Das Roundness (R) ist ein Maß für die Form der Region. R liegt zwischen 1 und 0. Für einen Kreis ist R=1 und für eine Region ohne Höhe oder ohne Breite ist R=0. Um das Roundness zu bestimmen, wird zuerst der Umfang (L) der Region als die Anzahl der Pixel der Grenze berechnet. Für die Region in Abb. 3.3 ist L die Anzahl der weißen Pixel, d.h. L=24. Das Roundness wird als

$$R = \frac{4\pi A}{L^2} \qquad (3\text{-}1)$$

definiert [2]. In unserem Beispiel ist R = 4x3,1416x45/24² = 0,98.

Der Mittelwert der Grauwerte der Region (G) ist:

$$G = \frac{1}{A} \sum_{i,j \in \Re} g_{ij} \qquad (3\text{-}2)$$

dabei sind:

→ $g_{ij}$ der Grauwert des Pixels ($i,j$), und

→ $\Re$ die Pixelmenge der Region. Im Beispiel der Abb. 3.3 ist das Pixel (4,6) ein Pixel dieser Menge. Die Anzahl der Pixel der Menge $\Re$ ist A, d.h. die Flächengröße der Region.

In unserem Beispiel ist G = 121,90 (G=0 bedeutet 100% schwarz und G=255 entspricht 100% weiß).

Der Mittelwert der Gradienten an der Grenze (H) wird als

$$H = \frac{1}{L} \sum_{i,j \in \lambda} g'_{ij} \qquad (3\text{-}3)$$

definiert, dabei sind:

→ $g'_{ij}$ der Gradient (1. Ableitung) des Grauwertes des Pixels ($i,j$), und

→  λdie Pixelmenge der Grenze (weiße Pixel in Abb. 3.3). Die Anzahl der Pixel der Menge λ ist L, d.h. der Umfang der Region.

In unserem Beispiel ist H = 35,47.

Im folgenden wird das Merkmal Kontrast (K) definiert. Unter Kontrast einer Region versteht man ein Maß der Schwärzungsdifferenz zwischen Region und ihrer Umgebung. Region und Umgebung definieren in dieser Arbeit ein Gebiet. Je geringer die Grauwertunterschiede in einem Gebiet sind, desto kleiner ist der Kontrast. Zur Visualisierung des Kontrastes können die Grauwerte des Gebietes als eine 3D-Funktion repräsentiert werden, indem die x- bzw. y-Achse die Koordinaten eines Pixels in der i-Richtung bzw. j-Richtung darstellen, und die z-Achse der Grauwert $g_{ij}$ des Pixels (i,j) ist. Abb. 3.4 zeigt diese Darstellung für unser Beispiel von Abb. 3.2a. Es ist zu erkennen, dass es sich um ein kontrastreiche Region handelt, weil die Höhe der Kurve groß ist.

Der Kontrast ist mathematisch in verschiedener Art und Weise definiert worden. Manche Definitionen führen zu einer aufwendigen Rechenzeit (s. Texturen in [2]). Andere einfachere Definitionen, wie die Differenz zwischen Maximum und Minimum der Grauwerte, sind aber sehr empfindlich gegen Rauschen. Auf diesem Grund verwendet man in dieser Arbeit eine neue Methode zur Berechnung des Kontrastes, die nicht zeitaufwendig ist. Die Methode wird in folgendem erläutert:

1) Profil des Gebietes: Man berechnet den Mittelwert **P** zweier Profile, **P**$_1$ und **P**$_2$, der Grauwerte des Gebietes: Das erste Profil **P**$_1$ in der *i*-Richtung und das zweite **P**$_2$ in der *j*-Richtung. Beide Profile werden im Schwerpunkt der Region zentriert. In unserem Beispiel liegt der Schwerpunkt bei (6,6), d.h. **P**$_1$ bzw. **P**$_2$ sind die Grauwerte der 6. Spalte bzw. der 6. Zeile des Röntgenbildes. Eine Darstellung von **P**$_1$, **P**$_2$ und des Mittelwertes **P** ist in Abb. 3.5 gezeigt.

$$P_1 = \text{Profil des Gebietes in i-Richtung}$$

$$P_2 = \text{Profil des Gebietes in j-Richtung}$$

$$P = (P_1 + P_2) / 2 \qquad\qquad (3\text{-}4)$$

2) Isolierung des Fehlers: Um den Fehler zu isolieren, wird sein Hintergrund eliminiert, der als eine Rampe modelliert wird. Es wird angenommen, dass die Extremwerte von P zu der Rampe gehören. Die Rampe wird aus **P** abgezogen. In Abb. 3.6 wird das neue Profil **Q** ermittelt.

$$R = \text{Rampe}(P) \qquad\qquad (3\text{-}5)$$

$$Q = P - R$$

3) Berechnung des Kontrastes: Der Kontrast K wird dann als die Standardabweichung des rampenfreien Profils geteilt durch die Länge des Profils definiert. D.h.

$$K = \frac{\sigma_Q}{n} \qquad\qquad (3\text{-}6)$$

wobei $\sigma_Q$ die Standardabweichung von **Q** ist und n die Anzahl der Pixel der Breite des Gebietes ist. In diesem Beispiel ist K = 4,21.

Wie erwähnt wird eine Region als hypothetischer Gussfehler klassifiziert, wenn ihre Merkmalswerte zwischen gewissen Werten liegen. Dieser Schritt muss die Segmentierung echter Gussfehler gewährleisten. Die Anzahl der Fehldetektionen wird aber nicht berücksichtigt.

Ein hypothetischer Gussfehler wird dann klassifiziert wenn:

- die Flächengröße (A) zwischen 15 und 550 Pixel ist, UND
- das Roundness (R) größer als 0,2 ist, UND
- der Mittelwert der Grauwerte (G) kleiner als 250 ist, UND
- der Mittelwert der Gradienten an der Grenze (H) größer als 1 ist UND
- der Kontrast (K) größer als 0,1 ist.

Diese Schwellwerte wurden durch *trial and error* eingestellt.

Die zwei Schritte des Algorithmus zur Segmentierung hypothetischer Gussfehler sind in Abb. 3.7 bei einem realen Röntgenbild dargestellt. Beim erfindungsgemäßen Verfahren ist es möglich, dass nicht alle echten Gussfehler in den Sequenzbildern segmentiert werden. Das ist der Fall bei einem Fehler, der an den Kanten einer konstruktiven Struktur des Prüflings liegt. In diesem Fall werden nicht alle Kanten des Fehlers detektiert, der Fehler wird deshalb nicht geschlossen und somit nicht segmentiert. Außerdem kann eine Verdeckung eines sehr kleinen Fehlers vorkommen, wenn er sich in einem dicken Querschnitt des Gussteiles befindet, in dem die Röntgenstrahlung stark absorbiert wird. Allerdings, wenn ein Fehler in vier oder mehr (nicht unbedingt aufeinanderfolgenden) Röntgenbildern segmentiert wird, kann er höchstwahrscheinlich verfolgt und detektiert werden. Ein Beispiel dieses Segmentierungsverfahrens ist in Abb. 3.8 gezeigt (s. schwarze Regionen).

Die Verfolgung hypothetischer Gussfehler läuft wie folgt ab:

Zur Trennung zwischen echten Gussfehlern und Fehldetektionen wird nach der Segmentierung versucht; die hypothetischen Gussfehler in der Bildsequenz zu verfolgen. Die Verfolgung besteht aus drei Schritten: Matching in zwei Bildern, Verfolgung in mehreren Bildern und Verifikation. Bevor diese Schritte durchgeführt werden, werden die Projektionsmatrizen sowie die multifokalen Tensoren berechnet.

Da die Röntgenbilder bei $N$ verschiedenen Positionen des Prüflings aufgenommen werden, wird ein Index $p$, $p = 1,...,N$, angewendet, um die Position des Prüflings zu bezeichnen.

Die Projektion eines 3D-Punktes $\mathbf{X}$ bei der Position $p$ des Prüflings wird im Röntgenbild als das Pixel $\mathbf{u}_p = [u_p \; v_p \; 1]^T$ bezeichnet.

Aus den aufgenommenen Positionsgrößen $(\bar{X}_0, \bar{Y}_0, \bar{Z}_0)_p$ und $(\omega_X, \omega_Y, \omega_Z)_p$ werden die Projektionsmatrizen $\mathbf{P}_p$, $p = 1,...,N$, durch Gleichung (2-2) berechnet.

Die Mehr-Bild-Tensoren lassen sich aus den Projektionsmatrizen $\mathbf{P}p$ ermitteln [7, 11].

Als nächstes wird ein Matching in zwei Bildern vorgenommen. Eine segmentierte Region kann als die Projektion eines 3D-Gussfehlers auf der Bildebene betrachtet werden. Da ein 3D-Gussfehler auf verschiedene Bilder der Sequenz projiziert werden kann, können Regionen verschiedener Röntgenbilder korrespondierend zueinander sein. Die korrespondierenden Regionen sind Projektionen ein und desselben 3D-Gussfehlers. In diesem Schritt wird es versucht, korrespondierende Regionen zweier Bilder zu verbinden.

Zum Matching von Regionen in zwei Bildern sind die Position der Regionen sowie ihre extrahierten Merkmalswerte erforderlich. In dieser Arbeit wird die segmentierte Region a des $p$-ten Bildes der Sequenz als $\mathbf{a} = (a,p)$ bezeichnet. Es wird angenommen, dass die Sequenz aus $N$ Bildern besteht ($1 \leq p \leq N$) und $n_p$ Regionen im $p$-ten Bild segmentiert wurden ($1 \leq p \leq N$). Die Position bzw. die Merkmalswerte der Region $\mathbf{a} = (a,p)$ sind in einem Positionsvektor $\mathbf{x}^a_p$ bzw. Merkmalsvektor $\mathbf{w}^a_p$ eingeordnet.

Als Position einer Region werden die Koordinaten ihres Schwerpunktes genommen, die in das Projektionskoordinatensystem durch Gleichung (2-4) transformiert werden. Der Positionsvektor wird dann

$$x^a_p = [x^a_p \; y^a_p \; 1]^T \tag{4-1}$$

Der Merkmalsvektor beinhaltet $n$ extrahierte und normierte Merkmalswerte der Region:

$$w^a_p = [w^a_p(1) \; w^a_p(2) \; .. \; w^a_p(n)]^T \tag{4-2}$$

Dieser Schritt verbindet zwei Regionen miteinander, nämlich Region $\mathbf{a} = (a,p)$ mit Region $\mathbf{b} = (b,q)$, für $p \neq q$, wenn sie alle folgenden Kriterien erfüllen:

a. Epipolare Bedingung: Die Schwerpunkte der Regionen müssen die epipolare Bedingung erfüllen [4]. Um zu überprüfen, ob die Schwerpunkte der Regionen, $\mathbf{x}^a_p$ und $\mathbf{x}^b_q$, die epipolare Bedingung erfüllen, wird als Kriterium benutzt, dass der senkrechte euklidische Abstand zwischen der Epipolargeraden des Punktes $\mathbf{x}^a_p$ im $q$-ten Bild und dem Punkt $\mathbf{x}^b_q$ kleiner als $\varepsilon_2$ sein muss:

$$\frac{\left| \mathbf{x}_q^{bT} \mathbf{F}_{pq} \mathbf{x}_p^a \right|}{\sqrt{\lambda_x^2 + \lambda_y^2}} < \varepsilon_2 \qquad\qquad (4\text{-}3)$$

mit $[\lambda_x\ \lambda_y\ \lambda_z]^T = \mathbf{F}_{pq}\ \mathbf{x}_p^a$. Dabei ist $\mathbf{F}_{pq}$ die sogenannte 3 x 3 Fundamental Matrix, deren Elemente die bifokalen Tensor sind [7, 11].

b. Kriterium der Ähnlichkeit: Die Regionen müssen ähnlich genug sein. Als Ähnlichkeitsmaß wird der euklidische Abstand zwischen den Merkmalsvektoren der Regionen angewendet. Das Ähnlichkeitsmaß S der Regionen muss kleiner als $\varepsilon_s$ sein:

$$S(\mathbf{w}_p^a, \mathbf{w}_q^b) = \sqrt{\sum_{i=1}^{n}\left[ \mathbf{w}_p^a(i) - \mathbf{w}_q^b(i) \right]^2} < \varepsilon_s \qquad\qquad (4\text{-}4)$$

Hier werden die in Abschnitt 3.2.2.1 definierten Merkmale benutzt.

c. Richtige Lokalisierung im 3D-Raum: Der rekonstruierte 3D-Punkt, der aus den Schwerpunkten der Regionen geschätzt wird, muss sich innerhalb des Raumes des Prüflings befinden. Der korrespondierende 3D-Punkt $\mathbf{X}$ wird durch das lineare Verfahren von Hartley [8] aus den Schwerpunkten $\mathbf{x}_p^a$ und $\mathbf{x}_q^b$ berechnet. Es wird überprüft, ob $\mathbf{X}$ im Prüfling liegt, dessen Dimensionen normalerweise a priori bekannt sind (z.B. eine Felge wird als ein Zylinder angenommen).

Die Erfüllung der drei Kriterien a-c wird bei allen zwei Regionen $\mathbf{a}$ = (a,$p$) und $\mathbf{b}$ = (b,$q$) in drei aufeinanderfolgenden Bildern der Sequenz überprüft, für $p$=1,...,$N$-3; $q$=$p$+1,..., $p$+3; a=1,...,$n_p$ und b=1,...,$n_q$.

Mit Hilfe dieser erfindungsgemäßen Verfahrensschritte können die erwähnten Probleme der Segmentierung (nicht segmentierte oder verdeckte Gussfehler) im Verfolgungsschritt gelöst werden, wenn ein Gussfehler in aufeinanderfolgenden Bildern nicht segmentiert wird.

Wenn ein hypothetischer Gussfehler mit keinem anderen verbunden wird, wird er als Fehldetektion klassifiziert. Vielfache Verbindungen sind erlaubt, d.h. eine Region darf mit mehr als einer Region verbunden werden.

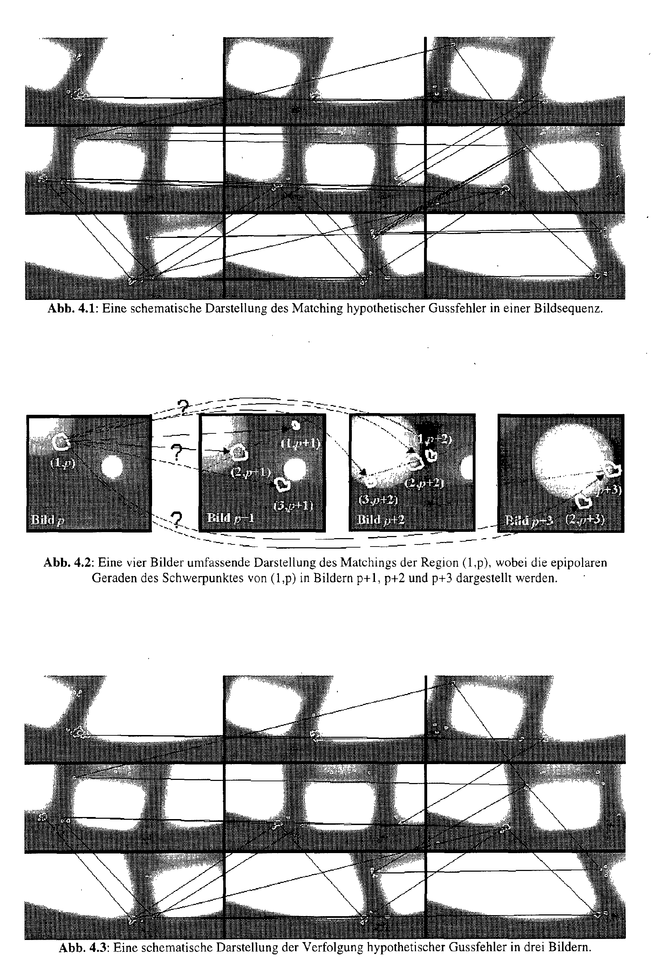

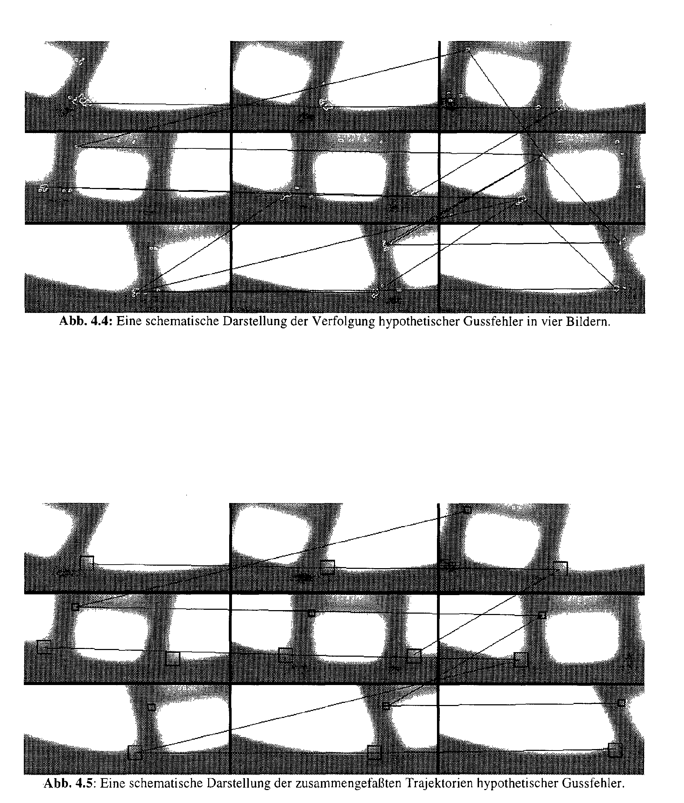

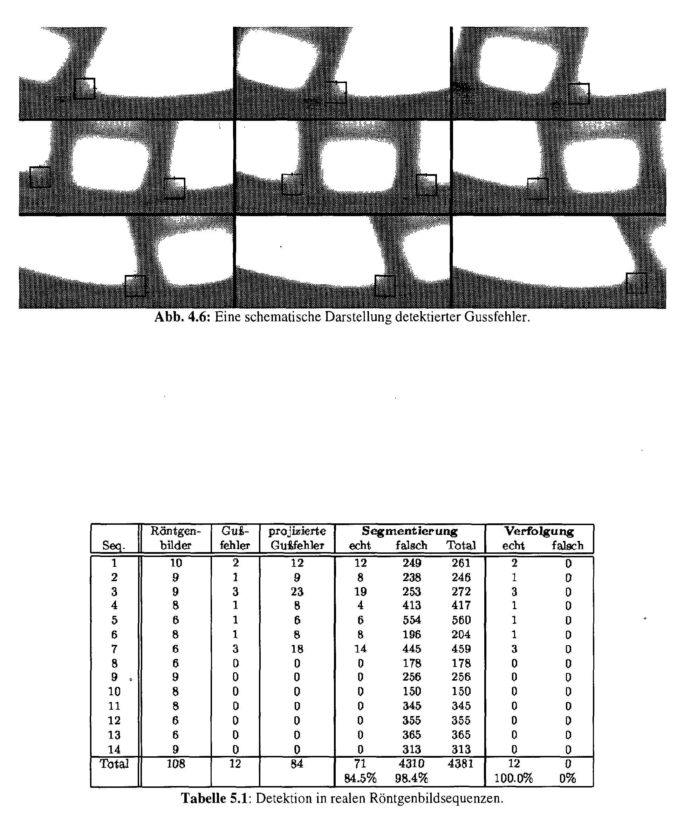

Nach diesem Verfahren werden die echten Gussfehler mit Erfolg verfolgt und sehr viele Fehldetektionen werden eliminiert. Das Beispiel ist in Abb. 4.1 dargestellt.

Das in Abb. 4.2 dargestellte Beispiel läßt das Matching in zwei Bildern verdeutlichen. Ausgehend von einer segmentierten Region (1,$p$) des Sequenzbildes p werden alle segmentierten Regionen der nächsten drei Sequenzbilder, $p$+1, $p$+2 und $p$+3, als mögliche Nachfolger untersucht. In diesem Fall erfüllen nur die Regionen (1,$p$+1), (2,$p$+1); (1,$p$+2), (2,$p$+2) und (1,$p$+3) die epipolare Bedingung. Außerdem wird das Kriterium der Ähnlichkeit von der Region (1,$p$+1) nicht erfüllt, weil ihre Flächengröße im Vergleich zu dem entsprechenden Merkmal der Region (1,$p$) zu klein ist. Da die Region (1,$p$+2) viel dunkler als die Region (1,$p$) ist, erfüllt auch diese nicht dieses Kriterium. Zusätzlich gehören die rekonstruierten 3D-Punkte dieser Verbindungen zu dem Raum des Prüflings. Daraus folgt, dass die möglichen Verfolgungen der Region (1,$p$) die Regionen (2,$p$+1), (2,$p$+2), und (1,$p$+3) sind.

Die Verfolgung in mehreren Röntgenbildern wird im folgendem erläutert. Eine Verbindung zwischen zwei Regionen $\mathbf{a}$ und $\mathbf{b}$ wird als $\mathbf{a} \rightarrow \mathbf{b}$ oder (a,$p$) $\rightarrow$ (b,$q$) bezeichnet. Man definiert eine $m_2$ x 4 Matrix $\mathbf{A}$ = $[\mathbf{a}_{i1}\ \mathbf{a}_{i2}]$ = $[(a_i,\ p_i)\ (b_i,\ q_i)]$, i=1,...,$m_2$, wobei $m_2$ die Anzahl der in zwei Bildern verbundenen Regionen ist.

Die Verfolgung in drei Bildern: Bei der Verfolgung werden Trajektorien von Regionen in der Bildsequenz gesucht. Die Regionen müssen korrespondierend zueinander sein. Ausgehend von den zunächst bestimmten Verbindungen von zwei Regionen kann man untersuchen, ob es Trajektorien mit drei Regionen gibt, deren Schwerpunkte die Projektionen ein und desselben 3D-Punktes sind. Man sucht alle möglichen Verbindungen von drei Regionen in der Matrix $\mathbf{A}$, die die Bedingung der Korrespondenz in drei Bildern erfüllen. Man bestimmt die Spalten $i$ und $j$ der Matrix $\mathbf{A}$ (für $i,j$=1,...$m_2$ und $i \neq j$), wobei

$$a_{i1} = a_{j2} \qquad\qquad (4.5)$$

Falls die Spalten $i$=$I$ und $j$=$J$ die Bedingung (4.5) erfüllen, z.B.

$$A_J = [(a,p)\ (b,q)]$$

und

$$A_I = [(b,q)\ (c,r)],$$

werden drei korrespondierenden Regionen mit Koordinaten $\mathbf{x}^a_p$, $\mathbf{x}^b_q$ und $\mathbf{x}^c_r$ gefunden, wenn

$$\left\| \hat{x}^c_r - x^c_r \right\| < \varepsilon_3 \qquad (4.6)$$

wobei $\hat{\mathbf{x}}^c_r$ die Schätzung der Koordinaten der dritten Region ist, die aus den Koordinaten der ersten zwei Regionen $\mathbf{x}^a_p$ und $\mathbf{x}^b_q$ durch die sogenannten Triliniaritäten von Shashua bzw. die trifokalen Bedingungen [16, 8] mit Hilfe der trifokalen Tensoren berechnet werden.

Die Regionen, die in drei Bildern nicht verfolgt werden können, werden als Fehldetektionen klassifiziert und deswegen eliminiert. Die verbundenen $m_3$ Drillinge werden in eine neue $m_3$ x 6 Matrix $\mathbf{B} = [\mathbf{b}_{k1}\ \mathbf{b}_{k2}\ \mathbf{b}_{k3}]$, $k=1,...,m_3$ eingeordnet. Abb. 4.3 zeigt die Verbindungen in drei Bildern, die in unserem Beispiel bestimmt werden.

Die Verfolgung in vier Bildern: Das gleiche Verfahren wird wiederholt, um Trajektorien mit vier Regionen ausfindig zu machen. Vierlinge werden gesucht, die die Bedingung der Korrespondenz in vier Bildern erfüllen. Man bestimmt die Spalten $i$ der Matrix $\mathbf{A}$ und die Spalten $k$ der Matrix $\mathbf{B}$, für $i=1,...,m_2$ und $k=1,...,m_3$, wobei

$$a_{i1} = b_{k3} \qquad (4.7)$$

Falls die Spalten $i=I$ und $k=K$ die Bedingung (4.7) erfüllen, z.B.

$$B_K = [\ (a,p)\ (b,q)\ (c,r)\ ]$$

und

$$A_I = [(c,r)\ (d,s)\ ],$$

werden vier korrespondierende Regionen mit Koordinaten $\mathbf{x}^a_p$, $\mathbf{x}^b_q$, $\mathbf{x}^c_r$ und $\mathbf{x}^d_s$ gefunden, wenn

$$\left\| \hat{x}^d_s - x^d_s \right\| < \varepsilon_4 \qquad (4.8)$$

d.h., wenn der euklidische Abstand zwischen der Schätzung der Koordinaten der vierten Region $\hat{x}^d_s$ und ihren tatsächlichen Koordinaten $\mathbf{x}^d_s$ kleiner als $\varepsilon_4$ ist. Um $\mathbf{x}^d_s$ zu schätzen, werden die quadrifokalen Bedingungen mit Hilfe der quadrifokalen Tensoren [7, 11] benutzt.

Die gefundenen Vierlinge werden in eine neue $m_4$ x 8 Matrix $C = [c_{l1}\ c_{l2}\ c_{l3}\ c_{l4}]$, $l=1,...,m_4$ gespeichert. Das Ergebnis in unserem Beispiel wird in Abb. 4.4 gezeigt. Nach unserer Erfahrung kann eine Wiederholung dieses Verfahrens für fünf Bilder zu einer Eliminierung der echten Gussfehler führen.

Die Trajektorien können wie folgt vereinfacht werden: Ein Gussfehler, der in mehr als vier Röntgenbildern zum Vorschein kommt, kann mehrere Vierlinge bilden. Zum Beispiel: Die Regionen

$$(1,2) \rightarrow (1,3) \rightarrow (4,5) \rightarrow (2,6)$$

und die Regionen

$$(1,2) \rightarrow (1,3) \rightarrow (4,4) \rightarrow (2,6)$$

sind Trajektorien desselben Gussfehlers. Eine Vereinfachung führt zu:

$$(1,2) \rightarrow (1,3) \rightarrow (4,4) \rightarrow (4,5) \rightarrow (2,6)$$

Solche korrespondierende Trajektorien lassen sich in eine einzige Trajektorie zusammenfassen, die aus mehr als vier Regionen besteht. Das Ergebnis in unserem Beispiel ist in Abb. 4.5 dargestellt. Man kann sehen, dass es eine Fehldetektion gibt (s. kleine Fehler).

Die Verifikation wird nachfolgend geschildert: Eine Trajektorie stellt die Verbindungen eines hypothetischen Gussfehlers entlang der Bildsequenz dar. Definiert man den Begriff Untersequenz eines Fehlers als die Bilder der Sequenz, in denen der Fehler anwesend ist, so ist eine Trajektorie manchmal in ihrer Untersequenz unterbrochen. Dies hat seinen Grund darin, dass der Fehler nicht immer in seiner ganzen Untersequenz segmentiert werden kann.

Aus jeder im vorigen Schritt gefundenen Trajektorie wird nun mit Hilfe einer Least-Squares-Methode [3] der korrespondierende 3D-Punkt **X** geschätzt, der die Schwerpunkte der verfolgten Regionen erzeugen würde. Dieser 3D-Punkt kann auf diejenige Bilder der Untersequenz projiziert werden, in denen die Segmentierung des Fehlers kein Erfolg hatte. Die Position des Fehlers ist dann in allen Bildern der Untersequenz bekannt. Seine Größe kann als der Mittelwert der Größen der segmentierten Fehler auch geschätzt werden.

In allen Bildern der Untersequenz ermittelt man nun kleine Fenster, die in den (geschätzten und gefundenen) Schwerpunkten der Regionen der Trajektorie zentriert sind, und deren Größen den Größen des Fehlers entsprechen. Diese kleine Fenster sind in Abb. 4.5 als kleine Rechtecke gezeigt.

Ein glättendes Fenster wird als der Mittelwert aller kleinen Fenster einer Trajektorie berechnet. Diese Operation unterdrückt das Quantenrauschen der Röntgenbilder. Es wird nun untersucht, ob der Kontrast des glättenden Fensters genügend hoch ist. Ist das der Fall, wird angenommen, dass der entsprechende hypothetische Gussfehler der Trajektorie ein echter Gussfehler ist und das Gussteil als Ausschußteil klassifiziert werden soll.

Abb. 4.6 zeigt die echten Gussfehler, die nach dieser Methode in unserer Röntgenbildsequenz detektiert werden. Das Ziel wird erreicht: Die echten Gussfehler lassen sich von den Fehldetektionen trennen.

Nun werden die experimentellen Ergebnisse vorgestellt, die bei der automatischen Inspektion einer Marken-Alufelge durch die Anwendung der beschriebenen Methode erhalten wurden. Diese Ergebnisse wurden bei realen und halbsynthetischen Röntgenbildern erzielt.

Die Parameter der Methode, die manuell eingestellt wurden, waren $\sigma$ = 1.25 Pixel (für die LoG-Maske), $\varepsilon_s$ = 0.7, $\varepsilon_2$ = 0.75 mm, $\varepsilon_3$ = $\varepsilon_4$ = 0.9 mm. Diese Parameter sind in diesen Untersuchungen unverändert geblieben. Es wurde angenommen, daß die Alufelge ein Zylinder folgender Dimensionen betrug: 200 mm Höhe und 470 mm Durchmesser. Der Abstand zwischen Röntgenquelle und Bildverstärker (optischer Abstand) betrug 884 mm.

Vierzehn realen Röntgenbildsequenzen einer Alufelge mit bekannten Gussfehlern wurden untersucht. Die Gussfehler wurden durch Bohren von kleinen Löchern (Ø = 2.0 ~ 7.5 mm) in Positionen produziert, von denen bekannt war, daß sie schwer detektierbar sind. Es gab Gussfehler nur in den ersten sieben Bildsequenzen.

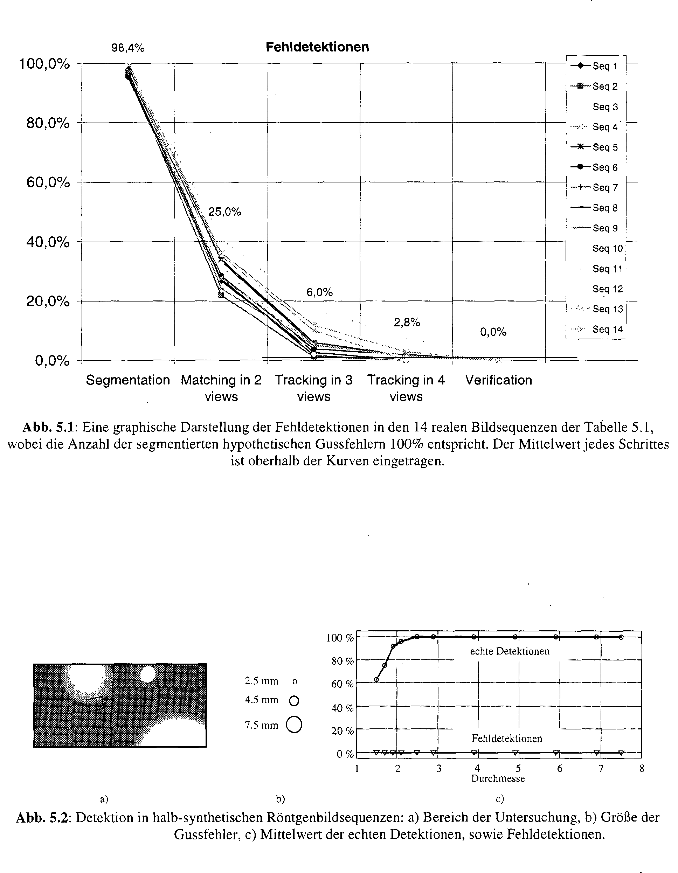

Die Ergebnisse sind in Tabelle 5.1 sowie in Abb. 5.1 zusammengefasst. Bei der Segmentierung betrug die Mißklassifizierung 98.4% (4310/4381). Die Effizienz dieses Schritts war jedoch erheblich, da 84.5% (71/84) der projizierten Gussfehler segmentiert wurden. Man erkennt, daß sich die Fehldetektionen in den nächsten Schritten eliminieren lassen, während die echten Gussfehler in allen Fällen mit Erfolg detektiert wurden.

Zur Untersuchung des Durchsatzes des erfindungsgemässen Verfahrens in kritischen Fällen wurden halbsynthetische Röntgenbilder verarbeitet. Ein einfaches 3D-Modell eines Gussfehlers (eine sphärische Blase) wurde in realen Röntgenbildern einer Alufelge mit Hilfe des Absorptionsgesetzes [10] eingeblendet.

In diesem Versuch wurde der künstliche Gussfehler auf zehn Röntgenbilder einer realen Alufelge projiziert. Die Lage dieses Gussfehlers wurde so gewählt, daß er bei der Projektion eine Kante der Struktur überlappte. Es wurden 24 solcher Positionen im in Abb. 5.2a dargestellten Bereich untersucht. Dieser Versuch wurde für verschiedene Größen (Ø = 1.5 ~ 7.5 mm) wiederholt (s. Abb. 5.2b).

Die Ergebnisse sind in Abb. 5.2c zu sehen. Die Anzahl der Fehldetektionen ist immer Null. Die Detektion ist perfekt für Ø ≥ 2.5 mm, und größer als 95% für Ø ≥ 2.1 mm. Die Segmentierung hat jedoch keinen Erfolg, wenn ein sehr kleiner Gussfehler genau an der Kante einer Struktur liegt. In diesem Fall könnte ein kleinerer Parameter $\sigma$ in der LoG-Maske der Kantendetektion gewählt werden, der leider die Anzahl der Fehldetektion erhöhen würde. Andere nicht kritische Versuche, bei denen die erwähnte Schwierigkeit nicht vorhanden war, führten zu perfekten Detektionen (100% echte Detektionen und 0% Fehldetektionen).

Das erfindungsgemäße Verfahren ist sehr effizient, weil es aus zwei grundlegenden Schritten besteht: Segmentierung und Verfolgung, wobei die Kalibrierung einmal einzustellen ist und beibehalten werden kann, sofern weder die Prüfanlage noch die Kamera örtlich verändert werden. Der Grundgedanke war es, die Art und Weise zu imitieren, in der ein menschlicher Prüfer Röntgenbilder auf Materialfehler untersucht: Zuerst erkennt er relevante Details, die er danach in der Bildsequenz verfolgt.

Im erfindungsgemäßen Verfahren werden zuerst hypothetische Gussfehler in jedem Röntgenbild der Sequenz segmentiert. Danach wird versucht, sie in der Bildsequenz zu verfolgen. Die Fehldetektionen der hypothetischen Gussfehler lassen sich gut eliminieren, weil sie nicht verfolgt werden können. Hingegen können die echten Gussfehler in der Bildsequenz mit Erfolg verfolgt werden, weil sie sich in Positionen befinden, die geometrische Bedingungen erfüllen.

Der große Vorteil des ersten Schrittes ist die Anwendung eines einzelnen Filters zur Segmentierung hypothetischer Gussfehler, das unabhängig von der konstruktiven Struktur des Prüflings ist.

Auch ist der zweite Schritt des erfindungsgemässen Verfahrens:

a) sehr effizient in der Eliminierung der Fehldetektionen und gleichzeitig in der Verfolgung der echten Gussfehler, und

b) sehr schnell wegen der Anwendung der Mehr-Bild-Tensoren.

Der Einsatz des erfindungsgemässen Verfahrens in der Industrie kann vorgenommen werden, da die Bestandteile in einem Laborprototyp getestet wurden, und die vorläufigen Ergebnisse vielversprechend sind.

Die vorliegende Erfindung wurde vorstehend im Hinblick auf die Feststellung von Gussfehlern beschrieben. Es dürfte jedoch ohne weiteres für den Fachmann einleuchten, daß sie sich gleichermassen zur Ermittlung von Materialfehlern schlechthin einsetzen lässt. Beispielsweise sei hier an Schweißfehler gedacht, sowie an Materialfehler von Reifen und anderen Kunststoffgegenständen.

Literaturverzeichnis

[1] Boerner, H.; Strecker, H.: "Automated X-Ray Inspection of Aluminum Casting", IEEE Trans. Pattern Analysis and Machine Intelligence, 10(1):79-91, 1988.

[2] Castleman, K.R: "Digital Image Processing", Prentice-Hall, Englewood Cliffs, New Jersey 07632, 1996.

[3] Faugeras, O.: "Three-Dimensional Computer Vision: A Geometric Viewpoint", The MIT Press, Cambridge MA, London. 1993.

[4] Faugeras, O.; Mourrain, B.: "On the geometry and algebra of the point and line correspondences between N images", in 5th. ICCV, Cambridge, MA, 951-956. 1995.

[5] Faugeras, O.; Papadopoulo, T.: "A nonlinear method for estimating the projective geometry of 3 views", ICCV 98, pp. 477-484, Bombay, India, Jan. 1998.

[6] Filbert, D.; Klatte, R.; Heinrich, W.; Purschke, M.: "Computer aided inspection of castings", In IEEE-IAS Annual Meeting, Atlanta, USA, 1087-1095, 1987.

[7] Hartley, R.: "Multilinear Relationships between Coordinates of Corresponding Image Points and Lines", Proceedings of the International Workshop on Computer Vision and Applied Geometry, International Sophus Lie Center, Nordfjordeid, Norway, August 1995.

[8] Hartley, R: "Lines and Points in Three Views and the Trifocal Tensor". International Journal of Computer Vision, 22(2):125-150, 1997.

[9] Hecker, H.: "Ein neues Verfahren zur robusten Röntgenbildauswertung in der automatischen Gussteilprüfung", Dissertation am Institut für Allgemeine Elektrotechnik, Technische Universität Berlin, 1995.

[10] Heinrich, W.: "Automatische Röntgenserienprüfung von Gussteilen", Dissertation am Institut für Allgemeine Elektrotechnik, Technische Universität Berlin, 1988.

[11] Heyden, A.: "A Common Framework for Multiple View Tensor", European Conference on Computer Vision (ECCV'98), 3-19. Freiburg, Germany, 2.-6. June 1998.

[12]  Mery, D.; Filbert, D.: "Epipolar Geometry in Radioscopic Images", Computerized Tomography for Industrial Applications and Image Processing in Radiology, DGZfP Proceedings BB 67-CD: 181-187, March 15-17, Berlin, Germany, 1999.

[13]  Mery, D.; Filbert, D.: "Verfolgung von Gussfehler in einer digitalen Roentgenbildsequenz - Eine neue Methode zur Automatisierung der Qualitätskontrolle von Gussteilen", XIII. Meßtechnik Symposium des Arbeitskreis der Hochschullehrer fuer Meßtechnik e.V., AHMT, 30.Sep. - 02.Okt. 1999, Hannover, Germany.

[14]  Mery, D.; Filbert, D.; Krüger, R.; Bavendiek, K.: "Automatische Gussfehlererkennung aus monokularen Bildsequenzen", Jahrestagung der DGZfP, (1):93-102, May 10 - 12, 1999, Celle, Germany.

[15]  Purschke M.; Schulenburg H.: "Fortschritte der vollautomatischen Röntgenprüfung", Jahrestagung der Deutschen Gesellschaft für Zerstörungsfreie Prüfung, Jahrestagung, 309-317,Bamberg 7.-9. Sept., 1998.

[16]  Shashua, A.: "Trilinear Tensor: The Fundamental Construct of Multiple-view Geometry and its Applications". International Workshop on Algebraic Frames For The Perception Action Cycle (AFPAC), Kiel Germany Sep. 8-9, 1997.

[17]  Wenzel, T.; Hanke, R.: "Fast image processing on die castings", Anglo-German Conference on NDT Imaging and Signal Processing, Oxford, 27-28 March, 1998.

[18]  Zhang, Z.: "On the Epipolar Geometry Between Two Images With Lens Distorsion", in Proc. Int. Conference Recognition (ICPR), Vol. I, pages 407-411, Aug. 1996, Vienna.

**Patentansprüche**

**1.** Verfahren zur automatischen Gussfehlererkennung in einem Prüfling mittels einer Prüfanlage, umfassend eine Röntgenstrahlungseinrichtung, Manipulator, Bildverstärker und Bildverarbeitungsrechner, bei dem während der Bewegung des Prüflings N Röntgenbilder aufgenommen werden, wobei jedes Röntgenbild einer Position des Prüflings entspricht, die zusammen mit dem jeweiligen Bild in digitalisierter Form gespeichert wird, und wobei hypothetische Fehler(bereiche) in jedem Bild gesucht, segmentiert und hinsichtlich ihrer Merkmale extrahiert und gespeichert werden, und wobei anschließend die hypothetischen Fehler(bereiche) in zwei oder mehr Bildern nach den Kriterien geometrischer Projektionen verfolgt und anaylsiert werden, **gekennzeichnet durch**

a. Kalibrieren **durch** Vermessen der Geometrie der Prüfanlage und Schätzen der geometrischen Transformation zwischen einem 3D-Punkt des Prüflings und einem 2D-Pixel des Röntgenbildes,
b. Aufnehmen und Speichern der translatorischen und rotatorischen Positionsgrössen des Prüflings im Moment jeder Aufnahme anhand eines Projektionskoordinatorsystems, das über die Stellung des Manipulators errechnet wird,
c. Berechnen und Speichern der geometrischen Parameter aus der unter b) registrierten Position und den Parameter der Kalibrierung unter a), die zur Korrespondenzsuche in zwei oder mehr Bildern notwendig sind,
d. Segmentieren hypothetischer Gussfehler in jeder Aufnahme, Extrahieren und Speichern der Merkmalswerte jedes segmentierten hypothetischen Gussfehlers, die seine Eigenschaften quantitativ charakterisieren,
e. Bestimmen der Koordinaten des Schwerpunktes der hypothetischen Gussfehler und Transformieren dieser Koordinaten in ein neues Koordinatensystem zur Eliminierung etwaiger Verzerrungen,
f. Verfolgen der hypothetischen Gussfehler in der Bildsequenz, wobei ein sog. matching von 2 Bildern, indem zwei Regionen miteinander verbunden werden, die die bifokale Bedingung, die Ähnlichkeitsbedingung und die Bedingung der 3D-Lokalisiserung erfüllen,
g. Aussortieren der die bifokale Bedingung, die Ähnlichkeitsbedingung und die Bedingung der 3D-Lokalisiserung nicht erfüllenden Fehldetektionen,
h. Verfolgen der restlichen hypothetischen Gussfehler in der Bildsequenz, wobei ein sog. trakking von 3 und 4 Bildern durchgeführt wird, indem drei bzw. vier Regionen miteinander verbunden werden, die die tri- bzw. quadrifokale Bedingung erfüllen,
i. Aussortieren der die multifokalen Bedingungen nicht erfüllenden hypothetischen Fehldetektionen,
j. Analysieren der bisher ermittelten Ergebnisse **durch** Festlegen eines 3D-Punktes aus den Schwerpunkten der verfolgten Regionen einer Trajektorie, Projizieren dieses 3D-Punktes in die Röntgenbilder, in denen der verfolgte hypothetische Gussfehler nicht segmentiert wurde, Betrachten desselben als Fenster, Untersuchen des Kontrastes anhand eines Schwellenwertes, der bei Überschreitung einen echten Gussfehler festlegt.

2.  Verfahren nach Anspruch 1, **gekennzeichnet durch** Berechnen und Speichern der projektiven Matrizen Pp, für p=(1...N) jeder Aufnahme aus der unter b.) registrierten Position und den Parametern der Kalibrierung unter a.) als Stufe cl).

3.  Verfahren nach Anspruch 1, **gekennzeichnet durch** Berechnen der multifokalen Tensoren aus den projektiven Matrizen als Stufe c2).

4.  Verfahren nach Anspruch 1, **gekennzeichnet durch** Suche nach **durch** Kanten gebildeten Fehlerbereichen mittels Extraktion, Klassifizieren und Speichern folgender Merkmale

    Flächengrösse (A),
    Roundness bzw. Formfaktor (R),
    Mittelwert des Grauwerte (G),
    Mittelwert der Gradienten an der Grenze (H), und
    Kontrast (K)

     als Stufe d).

5.  Verfahren nach Anspruch 1, **dadurch gekennzeichnet, daß** in der Stufe d) ein hypothetischer Gussfehler dann klassifiziert wird, wenn

    die Flächengröße (A) zwischen 15 und 550 Pixel ist, UND
    die Roundness (R ) größer als 0,2 ist, UND
    der Mittelwert der Grauwerte (G) kleiner als 250 ist, UND
    der Mittelwert der Gradienten an der Grenze (H) größer als 1 ist, UND
    der Kontrast (K) größer als 0,1 ist,
    wobei diese Schwellenwerte durch trial and error eingestellt werden.

6.  Verfahren nach Anspruch 1, **dadurch gekennzeichnet, daß** in der Stufe d) A die Fläche der Region darstellt, R $= \frac{4\pi A}{L^2}$, worin L der Umfang der Region darstellt, und

$$G = \frac{1}{A} \sum_{i,j \in \mathfrak{R}} g_{ij} \,,$$

worin $g_{ij}$ der Grauwert des Pixels (i.j) und $\mathfrak{R}$ die Pixelmenge der Region bildet, und wobei

$$H = \frac{1}{L} \sum_{i,j \in \lambda} g'_{ij} \,,$$

worin $g'_{ij}$ den Gradienten (1. Ableitung) des Grauwertes des Pixels (i,j), und $\lambda$ die Pixelmenge der Grenze bildet, und wobei K ein Maß der Schwärzungsdifferenz zwischen der Region und ihrer Umgebung darstellt.

7.  Verfahren nach Anspruch 1, **dadurch gekennzeichnet, daß** in der Stufe e) die Koordinaten der Projektionsebene nach folgenden Formeln berechnet werden

$$\begin{bmatrix} u' \\ v' \\ 1 \end{bmatrix} = \begin{bmatrix} k_x \cos(\alpha) & k_y \sin(\alpha) & u_0 \\ -k_x \sin(\alpha) & k_y \cos(\alpha) & v_0 \\ 0 & 0 & 1 \end{bmatrix}^{-1} \begin{bmatrix} u \\ v \\ 1 \end{bmatrix}$$

$$x = \frac{u'}{\sqrt{1 + \left[\dfrac{u'}{a}\right]^2 + \left[\dfrac{v'}{b}\right]^2}} \quad \text{und} \quad y = \frac{v'}{\sqrt{1 + \left[\dfrac{u'}{a}\right]^2 + \left[\dfrac{v'}{b}\right]^2}} \; ,$$

dabei sind $(u,v)$ die Koordinaten des Schwerpunktes des hypothetischen Gußfehlers im Röntgenbild und $(x,y)$ die transformierten Koordinaten, wobei die Parameter $a$, $b$, $k_x$, $k_y$, $\alpha$, $u_0$ und $v_0$ durch ein Gradientenverfahren aus Korrespondenzpunkten geschätzt werden.

8. Verfahren nach Anspruch 1, **dadurch gekennzeichnet, daß** das in Stufe g) geforderte Ähnlichkeitsmaß durch den euklidischen Abstand zwischen den Merkmalsvektoren der Regionen gebildet wird, wobei das Ähnlichkeitsmaß S der Regionen kleiner sein muß als $\varepsilon_s$:

$$S(\mathbf{w}_p^a, \mathbf{w}_q^b) = \sqrt{\sum_{i=1}^{n} \left[\mathbf{w}_p^a(i) - \mathbf{w}_q^b(i)\right]^2} < \varepsilon_s$$

dabei ist $\mathbf{w}_k^j = [w_k^j(1) \dots w_k^j(n)]^T$, wobei $w_k^j(i)$ der i-te Merkmalswert der j-ten Region im k-ten Bild ist.

9. Verfahren nach Anspruch 1, **dadurch gekennzeichnet, daß** ein Gussfehler nach der Verfolgung in vier Bildern zweimal verfolgt wird und die wiederholten Trajektorien in einer längeren Trajektorie zusammengefaßt werden.

10. Verfahren nach Anspruch 1, **dadurch gekennzeichnet, daß** die Ergebnisse des matching und tracking der Stufe f) und h) in einzelnen Tabellen gespeichert werden.

**Abb. 1.1**: Eine schematische Ausschnittsdarstellung von drei Gussfehlern in einem Röntgenbild einer Alufelge.

**Abb. 1.2:** Ein Diagramm einer automatischen Röntgenprüfanlage nach dem Stand der Technik.

**Abb. 1.3:** Ein vorbekanntes Verfahren zur automatischen Gussfehlererkennung nach [9] mit einem Prüfbild **I**, einem Referenzbild **R**, einem Fehlerdifferenzbild **D** und einem binären Segmentierungsergebnis **F**.

**Abb. 2.1:** Darstellung des geometrischen Modells.

**Abb. 2.2:** Ein Röntgenbild der Rasterplatte (links) und die hyperbolische Modellierung ihrer Verzerrung (rechts).

**Abb. 3.1**: Eine schematische Darstellung von einer Röntgenbildsequenz mit neun Bildern und zwei Gussfehlern im Kreis.

**Abb. 3.2**: Beispiel der Segmentierung: a) Röntgenbild. b) Kantendetektion. c) Gefundene Region.

**Abb. 3.3**: Darstellung einer geschlossenen Region.

**Abb. 3.4**: 3D Darstellung des in Abb. 3.2a gezeigten Röntgenbildes.

a         b         c

**Abb. 3.5:** Darstellung der Profile. a) $P_1$, b) $P_2$ und c) $P = (P_1 + P_2)/2$.

a         b

**Abb. 3.6**: Darstellung des rampenfreien Profils. a) **P** und seine Rampe R. b) **Q=P-R**.

(a) Kantendetektion           (b) hypothetische Gußfehler

**Abb. 3.7**: Eine schematische Ausschnittsdarstellungen einer Segmentierung hypothetischer Gussfehler im fünften Röntgenbild der in Abb. 3.1 dargestellten Bildsequenz.

**Abb. 3.8**: Eine schematische Darstellung der Segmentierung hypothetischer Gussfehler in der Bildsequenz der Abb. 3.1.

**Abb. 4.1**: Eine schematische Darstellung des Matching hypothetischer Gussfehler in einer Bildsequenz.

**Abb. 4.2**: Eine vier Bilder umfassende Darstellung des Matchings der Region (1,p), wobei die epipolaren Geraden des Schwerpunktes von (1,p) in Bildern p+1, p+2 und p+3 dargestellt werden.

**Abb. 4.3**: Eine schematische Darstellung der Verfolgung hypothetischer Gussfehler in drei Bildern.

**Abb. 4.4:** Eine schematische Darstellung der Verfolgung hypothetischer Gussfehler in vier Bildern.

**Abb. 4.5**: Eine schematische Darstellung der zusammengefaßten Trajektorien hypothetischer Gussfehler.

**Abb. 4.6:** Eine schematische Darstellung detektierter Gussfehler.

| Seq. | Röntgen-bilder | Guß-fehler | projizierte Gußfehler | Segmentierung | | | Verfolgung | |
|---|---|---|---|---|---|---|---|---|
| | | | | echt | falsch | Total | echt | falsch |
| 1 | 10 | 2 | 12 | 12 | 249 | 261 | 2 | 0 |
| 2 | 9 | 1 | 9 | 8 | 238 | 246 | 1 | 0 |
| 3 | 9 | 3 | 23 | 19 | 253 | 272 | 3 | 0 |
| 4 | 8 | 1 | 8 | 4 | 413 | 417 | 1 | 0 |
| 5 | 6 | 1 | 6 | 6 | 554 | 560 | 1 | 0 |
| 6 | 8 | 1 | 8 | 8 | 196 | 204 | 1 | 0 |
| 7 | 6 | 3 | 18 | 14 | 445 | 459 | 3 | 0 |
| 8 | 6 | 0 | 0 | 0 | 178 | 178 | 0 | 0 |
| 9 | 9 | 0 | 0 | 0 | 256 | 256 | 0 | 0 |
| 10 | 8 | 0 | 0 | 0 | 150 | 150 | 0 | 0 |
| 11 | 8 | 0 | 0 | 0 | 345 | 345 | 0 | 0 |
| 12 | 6 | 0 | 0 | 0 | 355 | 355 | 0 | 0 |
| 13 | 6 | 0 | 0 | 0 | 365 | 365 | 0 | 0 |
| 14 | 9 | 0 | 0 | 0 | 313 | 313 | 0 | 0 |
| Total | 108 | 12 | 84 | 71 | 4310 | 4381 | 12 | 0 |
| | | | | 84.5% | 98.4% | | 100.0% | 0% |

**Tabelle 5.1**: Detektion in realen Röntgenbildsequenzen.

**Abb. 5.1**: Eine graphische Darstellung der Fehldetektionen in den 14 realen Bildsequenzen der Tabelle 5.1, wobei die Anzahl der segmentierten hypothetischen Gussfehlern 100% entspricht. Der Mittelwert jedes Schrittes ist oberhalb der Kurven eingetragen.

**Abb. 5.2**: Detektion in halb-synthetischen Röntgenbildsequenzen: a) Bereich der Untersuchung, b) Größe der Gussfehler, c) Mittelwert der echten Detektionen, sowie Fehldetektionen.

**EP 1 148 333 A1**

**Europäisches Patentamt**

**EUROPÄISCHER RECHERCHENBERICHT**

Nummer der Anmeldung

EP 00 10 2507

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 689 048 A (COMMISSARIAT ENERGIE ATOMIQUE) 27. Dezember 1995 (1995-12-27) * Seite 1, Spalte 15 - Seite 2, Spalte 25 * | 1 | G01N23/04 G01N23/18 |
| A | BAUER N ET AL: "DEFEKTE IN WERKSTOFFEN SCHNELL UND EXAKT BESTIMMEN" TECHNISCHE RUNDSCHAU, HALLWAG VERLAG. BERN, CH, Bd. 84, Nr. 7, 14. Februar 1992 (1992-02-14), Seiten 74-76, XP000247709 ISSN: 1023-0823 * das ganze Dokument * | 1 | |
| A,D | FILBERT D ET AL: "COMPUTER AIDED INSPECTION OF CASTINGS" CONFERENCE RECORD OF THE INDUSTRY APPLICATIONS SOCIETY ANNUAL MEETING. (IAS). ATLANTA, OCT. 18 - 23, 1987, NEW YORK, IEEE, US, Bd. PART 2 CONF. 22, 18. Oktober 1987 (1987-10-18), Seiten 1087-1095, XP000012029 * das ganze Dokument * | 1 | |

**RECHERCHIERTE SACHGEBIETE (Int.Cl.7)**

G01N

Der vorliegende Recherchenbericht wurde für alle Patentansprüche erstellt

| Recherchenort | Abschlußdatum der Recherche | Prüfer |
|---|---|---|
| DEN HAAG | 29. August 2001 | Oestreich, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

**ANHANG ZUM EUROPÄISCHEN RECHERCHENBERICHT
ÜBER DIE EUROPÄISCHE PATENTANMELDUNG NR.**

EP 00 10 2507

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2001

| Im Recherchenbericht angeführtes Patentdokument | Datum der Veröffentlichung | Mitglied(er) der Patentfamilie | Datum der Veröffentlichung |
|---|---|---|---|
| EP 0689048 A | 27-12-1995 | FR 2721402 A | 22-12-1995 |